## Europäisches Patentamt

## European Patent Office

## Office européen des brevets

(19)

(11) Veröffentlichungsnummer: **0 250 866**
**B1**

(12) **EUROPÄISCHE PATENTSCHRIFT**

(45) Veröffentlichungstag der Patentschrift:
31.01.90

(51) Int. Cl.⁴: **B01D 53/34**

(21) Anmeldenummer: 87107660.0

(22) Anmeldetag: 26.05.87

(54) **Verfahren und Vorrichtung zur simultanen Abscheidung von Schwefeldioxid und Stickoxiden.**

(30) Priorität: 30.05.86 DE 3618208
12.07.86 DE 3623628

(43) Veröffentlichungstag der Anmeldung:
07.01.88 Patentblatt 88/1

(45) Bekanntmachung des Hinweises auf die Patenterteilung:
31.01.90 Patentblatt 90/5

(84) Benannte Vertragsstaaten:
AT BE CH DE ES GB IT LI LU NL SE

(56) Entgegenhaltungen:
DE-A- 3 020 301
US-A- 4 525 142

PATENT ABSTRACTS OF JAPAN, Band 6,
Nr. 11 (C-88)[889], 22. Januar 1982; & JP - A
- 56 136 629 (EBARA SEISAKUSHO K.K.) 26.10.1981

(73) Patentinhaber: Noell GmbH, Alfred-Nobel-Strasse 20,
D-8700 Würzburg 1(DE)

(72) Erfinder: Körner, Horst, Dipl.-Phys., Kurt Schumacher
Strasse 12, D-8705 Zellingen 2(DE)
Erfinder: Drechsler, Daniel, Dipl.-Phys.,
Peter-Haupt-Str. 86, D-8700 Wuerzburg(DE)

(74) Vertreter: Werner, Hans-Karsten, Dr. et al,
Deichmannhaus am Hauptbahnhof, D-5000 Köln 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der vorliegenden Erfindung ist ein Verfahren zur simultanen Abscheidung von Schwefeldioxid und Stickoxiden aus Rauchgasen mit Hilfe von Elektronenstrahlen und Zugabe eines alkalischen Reagenz sowie eine Vorrichtung zur Durchführung dieses Verfahrens.

Es ist bekannt, daß Schwefeldioxid aus Rauchgas durch Waschen mit Ammoniak oder alkalischen Lösungen abgetrennt werden kann (z.B. DE-B 1 056 771, DE-A 1 667 447, DE-A 1 669 319, DE-B 1 174 933). Dabei entsteht als Endprodukt insbesondere Ammoniumsulfat, das gegebenenfalls aus einer wäßrigen Lösung auskristallisierbar ist.

Ferner ist bekannt, Rauchgase durch eine ionisierende Bestrahlung zu behandeln. Nach DE-A 24 01 316 wird eine Elektronenbestrahlung angewendet, deren Gesamtdosis 1 Mrad oder mehr beträgt. Die Bestrahlung bewirkt, daß sich vorübergehend reaktionsfähige Radikale bilden und Bestandteile des Rauchgases in Nebel, Aerosole oder feste Partikel umgewandelt werden, die anschließend in einem Abscheider gesammelt werden. Die gleichzeitige Behandlung von Stickoxiden und Schwefeldioxid erfordert jedoch zusätzliche Maßnahmen, wie z.B. die Einhaltung eines bestimmten Verhältnisses von Schwefeldioxid zu Stickoxiden oder eine nachträgliche weitere Entschwefelung.

Gemäß DE-A 29 52 458 wird dem Rauchgas vor der Elektronenbestrahlung Ammoniak zugeführt. Außerdem wird das Rauchgas durch direkte Berührung mit Wasser oder Lösungen auf eine Reaktionstemperatur von 50 bis 80°C abgekühlt.

Nach DE-A 30 20 301 wird die Stärke des Elektronenstrahls entsprechend der Abgasmenge eingestellt, und die Konzentrationen von Stickoxid, Schwefeldioxid und Ammoniak werden gemessen, um eine geeignete Ammoniakmenge einzustellen, die für die Umwandlung ausreicht, aber einen Überschuß von Ammonikak vermeidet.

Nach US-A 4 372 832 wird in das auf 175°C vorgekühlte Rauchgas zur Absenkung der Temperatur unter 100°C und zur Erhöhung der Feuchtigkeit in einem Sprühabsorber eine Flüssigkeit eingesprüht und zugleich ein Reagenz eingeleitet. Im Sprühabsorber erfolgt eine teilweise Entschwefelung. Anschließend erfolgt eine Elektronenbestrahlung und eine weitere Reaktion zwischen den Reagenzien und den sauren nebel- oder aerosolförmigen Schadstoffteilen. Die gebildeten Stoffe sollen an Filtern trocken abgetrennt werden. In der praktischen Anwendung dieses Verfahrens wird als Reagenz ein Calciumderivat eingesetzt und als Endprodukt insbesondere Gips erzeugt. US-A 4 372 832 nennt als geeignete Reagenzien auch Verbindungen des Natriums und Magnesiums.

Ein Nachteil der vorstehend beschriebenen Verfahren ist, daß aus dem Reaktionsbehälter noch nebel- oder aerosolförmige Stoffe austreten, die sich an den Filtereinrichtungen als feuchter Niederschlag oder Flüssigkeit absetzen und hier nur schwer zu entfernen sind. Hierzu trägt die erhöhte Feuchtigkeit des abgekühlten Rauchgases bei. Werden als Reagenzien Natrium - oder Magnesiumverbindungen verwendet, so können sich auch die entstehenden Salze wie Natriumsulfat und Magnesiumsulfat in Lösungen an dem Filter oder Abscheider absetzen. Hierdurch wird nicht nur die Abscheidung der Stoffe erschwert, sondern es ist auch eine weitere Behandlung notwendig, bis ein Produkt entsteht, das verwendbar ist oder auf einer Deponie gelagert werden kann.

Die Aufgabe der vorliegenden Erfindung besteht darin, ein Verfahren zur simultanen Abscheidung von Schwefeldioxid und Stickoxiden aus Rauchgasen mit Hilfe von Elektronenstrahlen und Zugabe eines alkalischen Reagenz zu entwickeln, welches auch für kleinere Kraftwerke und industrielle Feuerungseinrichtungen geeignet ist, und daher bei tragbaren Investitions- und Betriebskosten eingesetzt werden kann. Das Verfahren soll nach Möglichkeit auch geeignet sein, die Rauchgase hinter Müllverbrennungsanlagen zu reinigen. Das Verfahren ist daher insbesondere geeignet für Anlagen unter 100 MW. In derartigen Anlagen fällt weniger als 100.000 Nm³/h Rauchgas an. Bei diesem Verfahren sollen nach Möglichkeit keine Abwasserprobleme entstehen. Es sollen möglichst niedrige Prozeßtemperaturen eingehalten werden, um Wärmerückgewinnungsmöglichkeiten zu erschließen. Es sollte keine Wiederaufheizung der Rauchgase erfolgen und trotz simultaner Abscheidung der Schadstoffe nach Möglichkeit nur eine Chemikalie zum Einsatz kommen. Es dürfen keine Probleme beim Stillstand auftauchen und es sollte eigenes Betriebspersonal zur Bedienung einsetzbar sein. Das Endprodukt sollte nach Möglichkeit wiederverwendbar oder gut deponierbar sein.

Diese Aufgabe ist überraschenderweise dadurch lösbar, daß das nur bezüglich Temperatur und Wassergehalt konditionierte Rauchgas mit den in Rauchgaskanälen üblichen Geschwindigkeiten von bis zu 20 m/s

a) in der Bestrahlungskammer auf Geschwindigkeiten von über 20, vorzugsweise über 25 m/s beschleunigt wird und mit Elektronenstrahlen beschossen wird, die Beschleunigungsspannungen unter 400 kV aufweisen,

b) vorzugsweise unmittelbar nach der Bestrahlung das alkalische Reagenz zugegeben wird und

c) aus dem so entstehenden Gemisch in einem Reaktionsraum mit Geschwindigkeiten von 5 - 15 m/s feste Reaktionsprodukte gebildet und anschließend abgeschieden werden.

Als alkalisches Reagenz kommen prinzipiell alle bisher für diesen Zweck vorgeschlagenen Reagenzien in Frage. Bevorzugt werde zunächst einmal Ammoniak und Ammoniumhydrogencarbonat, bei denen als Reaktionsprodukte feste, pulverförmige Gemische aus Ammonsulfat und Ammonnitrat abgeschieden werden. Diese Gemische lassen sich in üblicher Weise zu Düngemitteln konditionieren. Dies könnte zwar unmittelbar beim Betreiber der Anlage erfolgen, es kann jedoch ebenso gut zentral in Anlagen der bisherigen Düngemittelfabriken erfolgen.

Weiterhin kommen vorzugsweise als alkalisches Reagenz Calciumhydroxid und/oder Calciumcarbonat in Frage, bei denen als Reaktionsprodukte feste, pulverförmige Gemische aus Calciumsulfat, Calciumnitrat und Calciumcarbonat abgeschieden werden. Auch diese Gemische lassen sich beispielsweise zusammen mit der Flugasche als Landverfüllungsgut verwenden oder können umweltfreundlich deponiert werden.

Bei Verwendung von anderen alkalischen Reagenzien wie Natriumhydroxid, Kaliumhydroxid, Calciumoxid, Magnesiumoxid und Magnesiumhydroxid sollte es prinzipiell möglich sein, die Abfallstoffe so aufzuarbeiten, daß sie wiederverwendbar oder gut deponierbar sind.

Zur Durchführung des erfindungsgemäßen Verfahrens wird das Rauchgas bezüglich Temperatur und Wassergehalt vorzugsweise so konditioniert, daß die Temperatur 5 bis 40°C über dem Wassertaupunkt eingestellt wird. Hierdurch werden Kondensationen und feuchte Niederschläge in der gesamten Anlage vermieden. Weiterhin kann es vorteilhaft sein, das alkalische Reagenz nicht als wäßrige Lösung oder Suspension sondern als trockenes Pulver zuzugeben. Hierbei sollten dann möglichst die später näher beschriebenen Verfahrensbedingungen zur Anwendung kommen.

Um die erfindungsgemäßen drei Geschwindigkeitsbereiche für das Rauchgas vor, in und nach der Bestrahlungskammer zu erreichen, wird die Bestrahlungskammer vorzugsweise als Venturirohr oder flache Venturidüse ausgebildet, wobei der Reaktionsraum nach der Bestrahlungskammer einen größeren Querschnitt aufweist als die Zuführung für das konditionierte Rauchgas.

Um eine unerwünschte Röntgeneinstrahlung in die vor- und nachgeschalteten Teile der Anlage zu vermeiden, empfiehlt es sich, die Vorrichtung so auszugestalten, daß die Zuleitung zur Bestrahlungskammer und die Ableitung von der Bestrahlungskammer jeweils um 90° abgeknickt sind.

Überraschenderweise ist es erfindungsgemäß ausreichend, in einem relativ kleinen Volumen der Bestrahlungskammer die Rauchgase mit erhöhten Geschwindigkeiten von über 20, vorzugsweise über 25 m/s mit Elektronenstrahlen zu beschießen, welche Beschleunigungsspannungen unter 400 kV aufweisen. Zur Verlängerung der Aufenthaltszeiten des Rauchgases in der Bestrahlungskammer ist es dabei möglich, dieses zusätzlich vor dem Eintritt und beim Durchtritt durch die Bestrahlungskammer zu verwirbeln, beispielsweise durch tangentiale Einführung und/oder Leitbleche. Nach dem Stand der Technik, beispielsweise gemäß DE-A 24 01 316, hat man bisher geglaubt, das Rauchgas relativ lange der Elektronenstrahlung aussetzen zu müssen, wobei es dann nötig war, bezogen auf die Zu- und Ableitungen, große Bestrahlungskammern vorzusehen, in denen die Geschwindigkeiten des Rauchgases wesentlich niedriger sind als in den Zu- und Ableitungen. Dies führt zu unerwünschten Ablagerungen von festen oder feuchten Produkten in der Bestrahlungskammer, weshalb es notwendig war, aufwendige und komplizierte Ausgestaltungen der Bestrahlungskammer zu entwickeln, wie sie beispielsweise in der DE-A 29 52 458 beschrieben sind.

Erfindungsgemäß ist es möglich, mit Expositionszeiten des Rauchgases in der Bestrahlungskammer von 0,01 bis 0,5 Sekunden zu arbeiten, und dennoch eine gute Umsetzung von Schwefeldioxid und Stickoxiden zu Sulfat und Nitrat zu erreichen. Entscheidend ist nämlich entgegen der Ansicht des Standes der Technik nicht die Dauer der Bestrahlung, sondern eine ausreichende anschließende Zeit für die Reaktion des bestrahlten Rauchgases mit dem alkalischen Reagenz.

Dieses wird daher erfindungsgemäß vorzugsweise unmittelbar nach der Bestrahlung zugegeben, wobei dies noch im Venturirohr bzw. in der Venturidüse, spätestens jedoch unmittelbar danach, erfolgen sollte. Durch eine ausreichend große Dimensionierung des Reaktionsraumes hinter der Bestrahlungskammer verlangsamt sich das Gemisch aus bestrahltem Rauchgas und alkalischem Reagenz, so daß sich innerhalb einer ausreichenden Reaktionszeit die festen Reaktionsprodukte bilden und anschließend abgeschieden werden können.

Überraschenderweise ist es sogar möglich, trotz der relativ kurzen Expositionszeiten des Rauchgase in der Bestrahlungskammer von 0,01 bis 0,5 Sekunden mit Elektronenstrahlen zu arbeiten, die Beschleunigungsspannungen unter 400 kV aufweisen. Vorzugsweise wird mit Beschleunigungsspannungen von 200 bis 300 kV gearbeitet. Diese niedrigen Beschleunigungsspannungen weisen den großen Vorteil auf, nur relativ weiche Röntgenstrahlung zu erzeugen, so daß es möglich ist, die Abschirmung ausschließlich mit Hilfe von Bleiplatten vorzunehmen. Abschirmungen aus Bleiplatten gestatten es, sie mobil auszugestalten, so daß einerseits auch im Betrieb in unmittelbarer Nähe der Anlage gearbeitet werden kann und andererseits nach dem Abschalten der Elektronenstrahlen auch das Innere der Bestrahlungskammer einfach zugänglich wird. Bestrahlungskammern nach dem Stand der Technik gemäß DE-A 24 01 316, die für hochenergetische Bestrahlungen vorgesehen sind, benötigen eine nicht mehr mobile Betonabschirmung und sind daher wesentlich schwieriger und aufwendiger zu warten.

Elektronenstrahlen mit einer Beschleunigungsspannung von 300 kV besitzen eine wirksame Eindringtiefe in das Rauchgas von etwa 70 cm. Bei Verwendung von zwei sich gegenüberstehenden Elektronenstrahlkanonen kann somit der Durchmesser des Venturirohres maximal 150 cm betragen. Vorzugsweise wird jedoch mit Durchmessern von 80 bis 120 cm gearbeitet. Das gleiche gilt für flache Venturidüsen, welche von beiden Seiten mit Elektronenstrahlkanonen ausgestattet sind. Flache Venturidüsen weisen den Vorteil auf, daß nebeneinander und/oder hintereinander flächig mehrere Elektronenstrahlkanonen angebracht werden können, und zwar von beiden Seiten der Flächen. Das erfindungsgemäße Verfahren ist somit trotz der Dimensionsbeschränkung von etwa 150 cm Querschnitt in der Bestrahlungskammer bezüglich der Dimensionierung der Gesamtanlage flexibel ausgestaltbar. Elektronenstrahlkanonen mit Beschleunigungsspannungen von ca. 300 kV sind in der Zwischenzeit entwickelt worden und versprechen Standzeiten bei der Kathode von 6.000 bis 10.000 Betriebsstunden. Die bisher beobachteten Probleme der Verschmutzung der Austrittsfenster entfallen bei dem erfindungsgemäßen Verfahren, da die hohen Geschwindigkeiten des bestrahlten Rauchgases Ablagerungen vermeiden und sogar noch einen Selbstreinigungseffekt aufweisen. Auch eine aufwendige Kühlung beispielsweise der Titanfolie kann gegebenenfalls unterbleiben, da schon das schnell vorbeigeführte Rauchgas für eine ausreichende Kühlung sorgt.

Die Konditionierung des Rauchgases bezüglich Temperatur und Wassergehalt erfolgt erfindungsgemäß durch Einsprühen von Wasser in das Rauchgas, welches im Luftvorwärmer (LUVO) auf Temperaturen von 150 bis 170°C heruntergekühlt wurde, auf einen Wassergehalt von 8 bis 18 Vol.-% und Temperaturen zwischen 60 und 90°C. Temperatur und Wassergehalt können dabei abhängig gemacht werden vom Gehalt des Rauchgases an Schwefeldioxid und Stickoxiden. Der Wassergehalt soll dabei mindestens stöchimetrisch sein, kann jedoch ohne weiteres auch bis zum 2,5-fachen erhöht werden, ohne daß es dadurch bereits zur Abscheidung von feuchten oder verklebten Endprodukten kommt. Wesentlich ist allein, daß die Temperatur mindestens 5°C, vorzugsweise 10 bis 20°C, über dem Wassertaupunkt gehalten wird. Eine weitere Möglichkeit zur Regelung des Verfahrens bestünde prinzipiell darin, auch das alkalische Reagenz vorzuwärmen, jedoch ist es verfahrenstechnisch wesentlich einfacher, die Temperatur des Rauchgases bei der Konditionierung ausreichend hoch zu wählen.

Die Abscheidung der gebildeten festen Reaktionsprodukte erfolgt in an sich bekannter Weise durch Gewebe- und/oder Elektrofilter, aus denen sie in üblicher Weise ausgetragen werden können. Um die Gewebefilter besser abreinigen zu können, empfiehlt es sich, trockene Filtrierhilfen einzublasen.

Erfindungsgemäß reicht für eine Anlage mit einem Rauchgasanfall von 70.000 Nm³/h eine absorbierte Dosis von 1,3 Mrad. Vorzugsweise am Ausgang des Venturirohres unmittelbar nach der Bestrahlung wird Ammoniak zudosiert. Das Rauchgas mit der gebildeten Schwefelsäure und Salpetersäure und dem gut vermischten Ammoniak tritt in den erweiterten Reaktorteil ein, wodurch sich die Geschwindigkeit entsprechend senkt und die notwendige Zeit für die Salzbildung zur Verfügung steht. Die gebildeten festen Salze werden in einem anschließenden Gewebefilter abgeschieden und das gereinigte Rauchgas in den Schornstein geleitet. Das Endprodukt kann in einem Silo zunächst zwischengelagert und von dort abtransportiert werden.

In der Konditionierungsstufe wird das Rauchgas von 160°C durch Zumischen von Luft, Wasser und Wasserdampf auf Temperaturen zwischen 60 und 100°C eingestellt. Aus Warmwasser, Ammoniak und Verdünnungsluft wird ein Gemisch hergestellt, welches vorzugsweise im hinteren Teil des Venturirohres zudosiert werden kann. Das bestrahlte und mit Ammoniak versetzte Gemisch weist Temperaturen zwischen 70 und 110°C auf und wird nach dem Abtrennen der Feststoffe mit diesen Temperaturen in den Kamin geleitet. Es ist daher keine Wiedererwärmung der gereinigten Rauchgase erforderlich.

Sofern das alkalische Reagenz als trockenes Pulver zugegeben wird, sollte auf folgende Bedingungen geachtet werden: Die Temperatur des Pulvers sollte niedriger sein als die des Rauchgases. Die Partikel dieses Pulvers bilden dann Kondensations- und/oder Kristallisationskeime, an die sich die nebelförmigen Bestandteile anlagern, wobei zugleich eine neutralisierende bzw. Salze bildende Reaktion erfolgt.

Wenigstens 50% des Pulvers sollte eine Korngröße besitzen, die kleiner als 10 μm ist ($d_{50} < 10$ μm). Diese Feinkörnigkeit gewährleistet eine große Zahl von Partikeln, mit denen die nebelartigen Bestandteile reagieren und die von dem Rauchgasstrom mitgenommen werden. Die Feinkörnigkeit ergibt für den Ablauf der Reaktionen vorteilhafte große Oberflächen.

Als pulverförmige Reagenzien kommen Ammoniumverbindungen in Frage oder Verbindungen von Elementen der ersten und zweiten Hauptgruppe, wie zum Beispiel des Natriums, Kaliums, Calciums oder Magnesiums.

Geeignet sind beispielsweise Ammoniumhydrogencarbonat, Natriumcarbonat und Calciumcarbonat.

In Verbindung mit einer Kühlung und Befeuchtung des Rauchgases vor der Elektronenstrahlbehandlung kann ein weiteres Reagenz, zum Beispiel in Form einer wäßrigen Lösung oder Suspension, in herkömmlicher Weise zugeführt werden, das einen Teil der Schadstoffe vor und während der Elektronenstrahlbehandlung bindet. Der Feuchtigkeitsgehalt unter Einschluß des Wassergehaltes der gegebenenfalls zugeführten Suspension wird so eingestellt, daß er im Bereich der Elektronenbestrahlung bei 60 bis 80°C möglichst hoch ist, aber nach den Reaktionen der Schadstoffe die Reaktionsprodukte trocken abtrennbar sind.

Je nach der Zusammensetzung der Rauchgase und anfallenden Rauchgasmenge sind die Mengen und gegebenenfalls auch die Arten der Reagenzien zu wählen. Ein stöchiometrisches Verhältnis von Schadstoffen zu Reagenzien beträgt bei der simultanen Abscheidung etwa 0,8 bis 3,5. Eine Überdosierung der pulverförmigen Reagenzien ist nicht nachteilig, da auch Pulverpartikel, die nicht mit den Schadstoffen reagiert haben, an den Filtern abgeschieden werden.

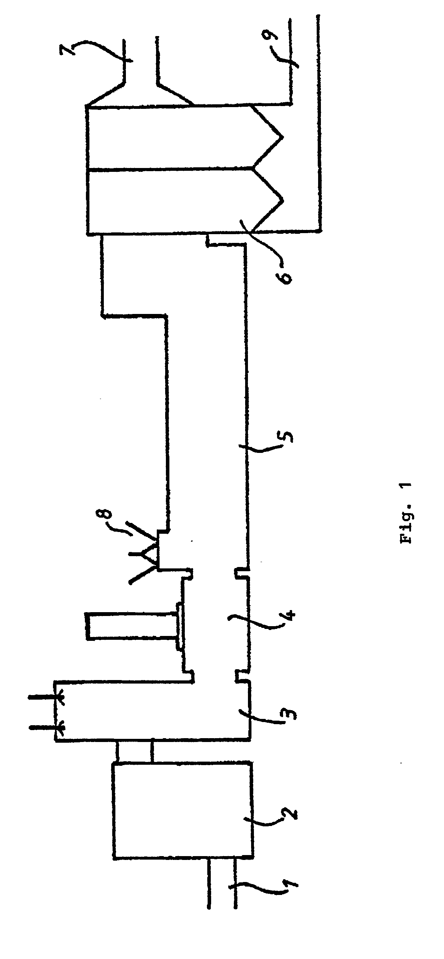

Ein Ausführungsbeispiel wird anhand der beigefügten schematischen Skizze (Fig. 1) beschrieben.

Das heiße, zweckmäßigerweise vorgereinigte Rauchgas wird über die Zuleitung (1) in einen Vorkühler (2) geleitet, in dem durch einen Wärmetauscher die Rauchgastemperatur auf 160°C verringert wird.

In der anschließenden Konditionierungsstrecke (3) wird vorzugsweise durch Einsprühen von Wasser das Rauchgas weiter auf eine Temperatur unter 120°C, zweckmäßigerweise auf eine Temperatur von 60 bis 80°C abgekühlt und zugleich ein Wassergehalt zwischen 5 und 15 Vol.-% eingestellt. Das so konditionierte Rauchgas strömt durch die Elektronenstrahl-Behandlungskammer (4). Die Bestrahlung erfolgt so, daß die absorbierte Dosis 0,2 bis 2,0 Mrad. beträgt. Die Rauchgasgeschwindigkeit kann je nach der Abgasanlage zwischen 2,0 und 30 m/sec. liegen. An die Behandlungskammer (4) schließt eine Durchlaufstrecke (5) an, an deren Ende die Filtereinrichtung (6) angeordnet ist, aus der das gereinigte Rauchgas über eine Ableitung (7) zu einem nicht dargestellten Schornstein entweicht. Unmittelbar hinter der Elektronenstrahl-Behandlungskammer (4) und am Beginn der Durchlaufstrecke (5) ist eine Dosiereinrichtung (8) für die Einleitung von trockenem, feinen, pulverförmigen Reagenz in den ionisierten Rauchgasstrom vorgesehen, der die mit dem Reagenz reaktionsfähigen Bestandteile der Schadstoffe in Form von Nebel oder Aerosolen enthält. Das Pulver wird von dem Rauchgasstrom mitgerissen und in ihm verteilt, wobei die trockenen und relativ kühlen Pulverpartikel Anlagerungskeime, insbesondere für die nebelartigen Anteile, die überwiegend den Charakter einer Säure haben, bilden und wobei zugleich chemische Verbindungen zwischen diesen Anteilen und dem Pulver unter Freisetzung von zum Beispiel $CO_2$ und $H_2O$ gebildet werden. Am Ende der Durchlaufstrecke sind die Nebel weitgehend aufgelöst, und an den Filtern werden im wesentlichen feste Partikel abgeschieden.

Die Temperatur und die Feuchtigkeit werden so eingestellt, daß das Rauchgas, welches sich in der Behandlungskammer etwas über die Konditionier-Temperatur erwärmt, in der Durchlaufstrecke die bei den Umwandlungen entstehende Feuchtigkeit aufnehmen kann und auch an dem Filter kein Kondensieren dieser Feuchtigkeit eintreten kann.

Als Filter können Gewebe- oder Elektrofilter eingesetzt werden. Über eine Austrageeinrichtung (9) werden die ausgefilterten Stoffe aus der Filtereinrichtung (6) entfernt.

## Patentansprüche

1. Verfahren zur simultanen Abscheidung von Schwefeldioxid und Stickoxiden aus Rauchgasen mit Hilfe von Elektronenstrahlen und Zugabe eines alkalischen Reagenz, dadurch gekennzeichnet, daß das nur bezüglich Temperatur und Wassergehalt konditionierte Rauchgas mit den in Rauchgaskanälen üblichen Geschwindigkeiten von bis zu 20 m/s
   a) in der Bestrahlungskammer auf Geschwindigkeiten von über 20, vorzugsweise über 25 m/s beschleunigt wird und mit Elektronenstrahlen beschossen wird, die Beschleunigungsspannungen unter 400 kV aufweisen,
   b) vorzugsweise unmittelbar nach der Bestrahlung das alkalische Reagenz zugegeben wird und
   c) aus dem so entstehenden Gemisch in einem Reaktionsraum mit Geschwindigkeiten von 5 - 15 m/s feste Reaktionsprodukte gebildet und anschließend abgeschieden werden.

2. Verfahren gemäß Anspruch 1, dadurch gekennzeichnet, daß als alkalisches Reagenz Ammoniak oder Ammoniumhydrogencarbonat zugegeben werden und als Reaktionsprodukte feste, pulverförmige Gemische aus Ammonsulfat und Ammonnitrat abgeschieden werden.

3. Verfahren gemäß Anspruch 1, dadurch gekennzeichnet, daß als alkalisches Reagenz Calciumhydroxid und/oder Calciumcarbonat zugegeben wird und als Reaktionsprodukte feste, pulverförmige Gemische aus Calciumsulfat, Calciumnitrat und Calciumcarbonat abgeschieden werden.

4. Verfahren gemäß einem der Ansprüche 1 bis 3, dadurch gekennzeichnet, daß zum Konditionieren die Temperatur des Rauchgases 5 bis 40°C über dem Wassertaupunkt eingestellt wird.

5. Verfahren gemäß einem der Ansprüche 1 bis 4, dadurch gekennzeichnet, daß die Expositionszeit des Rauchgases in der Bestrahlungskammer 0,01 bis 0,5 Sekunden beträgt.

6. Verfahren gemäß einem der Ansprüche 1 bis 5, dadurch gekennzeichnet, daß das alkalische Reagenz als trockenes Pulver zugegeben wird.

7. Verfahren nach Anspruch 6, dadurch gekennzeichnet, daß die Temperatur des Pulvers bei seiner Eindosierung in den Rauchgasstrom niedriger als die des Rauchgases ist.

8. Verfahren nach einem der Ansprüche 6 oder 7, dadurch gekennzeichnet, daß die Korngröße des Pulvers $d_{50} < 10$ µm beträgt.

9. Vorrichtung zur Durchführung des Verfahrens gemäß einem der Ansprüche 1 bis 8, dadurch gekennzeichnet, daß die Bestrahlungskammer (4) als Venturirohr oder flache Venturidüse ausgebildet ist und der Reaktionsraum (5) einen größeren Querschnitt aufweist als die Zuführung für das konditionierte Rauchgas.

10. Vorrichtung gemäß Anspruch 9, dadurch gekennzeichnet, daß die Zuleitung zur Bestrahlungskammer (4) und die Ableitung von der Bestrahlungskammer (4) jeweils um 90° abgeknickt sind.

## Revendications

1. Procédé de séparation simultanée de l'anhydride sulfureux et d'oxydes d'azote de gaz de fumée à l'aide de rayons d'électrons et par l'addition d'un réactif alcalin, caractérisé en ce que le gaz de fumée, uniquement conditionné quant à la température et la teneur en eau, possédant les vitesses usuelles dans les canaux à gaz de fumée allant jusqu'à 20 m/s
   a) est accéléré dans la chambre d'irradiation jusqu'à des vitesses supérieures à 20, de préférence supérieures à 25 m/s et est irradié de rayons d'électrons, qui présentent des tensions d'accélération inférieures à 400 kV,
   b) est additionné du réactif alcalin, de préférence, immédiatement après l'irradiation et
   c) des produits de réaction se forment à partir du mélange ainsi formé dans une enceinte ou un espace de réaction, avec des vitesses de 5 - 15 m/s, et sont ensuite séparés.

2. Procédé suivant la revendication 1, caractérisé en ce qu'à titre de réactif alcalin, on ajoute de l'ammoniac ou de l'hydrogénocarbonate d'ammonium et, à titre de produits de la réaction solides, se séparent des mélanges pulvérulents de sulfate d'ammonium et de nitrate d'ammonium.

3. Procédé suivant la revendication 1, caractérisé en ce qu'à titre de réactif alcalin, on ajoute de l'hydroxyde de calcium et/ou du carbonate de calcium et à titre de produits de la réaction solides, se séparent des mélanges pulvérulents de sulfate de calcium, de nitrate de calcium et de carbonate de calcium.

4. Procédé suivant l'une quelconque des revendications 1 à 3, caractérisé en ce que pour le conditionnement, on règle la température du gaz de fumée de 5 à 40°C au-delà du point de rosée de l'eau.

5. Procédé suivant l'une des revendications 1 à 4, caractérisé en ce que la durée d'exposition du gaz de fumée dans la chambre d'irradiation varie de 0,01 à 0,5 seconde.

6. Procédé suivant l'une des revendications 1 à 5, caractérisé en ce que l'on ajoute le réactif alcalin sous forme de poudre sèche.

7. Procédé suivant la revendication 6, caractérisé en ce que la température de la poudre lors de son introduction dans le courant de gaz de fumée, est inférieure à celle du gaz de fumée.

8. Procédé suivant l'une des revendications 6 ou 7, caractérisé en ce que le calibre des grains de la poudre $d_{50}$, est inférieure à 10 µm.

9. Installation pour la mise en œuvre du procédé suivant l'une quelconque des revendications 1 à 8, caractérisée en ce que la chambre d'irradiation (4) est conformée en tube venturi ou en tuyère venturi plate et l'enceinte ou espace de réaction (5) présente une section transversale supérieure à celle de la conduite d'arrivée prévue pour le gaz de fumée conditionné.

10. Installation suivant la revendication 9, caractérisée en ce que la conduite d'entrée dans la chambre d'irradiation (4) et la conduite d'évacuation de la chambre d'irradiation (4) sont chacune ployées de 90°.

**Claims**

1. A process for the simultaneous removal of sulfur dioxide and nitrogen oxides from flue gases by means of electron beams and addition of alkaline reagent, characterized in that the flue gas having been conditioned only with respect to temperature and water contents and having velocities as usual in flue gas channels of up to 20 m/s

a) is accelerated in the irradiation chamber to velocities in excess of 20 m/s, and preferably in excess of 25 m/s and is bombarded with electron beams having accelerating voltages of below 400 kV,

b) the alkaline reagent is added thereto, preferably immédiately after the irradiation, and

c) solid reaction products are formed from the resulting mixture at velocities of from 5 to 15 m/s in a reaction volume and are subsequently precipitated.

2. The process according to claim 1, characterized in that ammonia or ammonium hydrogencarbonate is added as the alkaline reagent and powdery mixtures comprising ammonium sulfate and ammonium nitrate are precipitated.

3. The process according to claim 1, characterized in that calcium hydroxide and/or calcium carbonate is added as the alkaline reagent and powdery mixtures comprising calcium sulfate, calcium nitrate and calcium carbonate are precipitated.

4. The process according to any one of claims 1 to 3, characterized in that for conditioning the temperature of the flue gas is adjusted to from 5°C to 40°C above the dew point of water.

5. The process according to any one of claims 1 to 4, characterized in that the exposition time of the flue gas in the irradiation chamber is from 0.01 to 0.5 seconds.

6. The process according to any one of claims 1 to 5, characterized in that the alkaline reagent is added as a dry powder.

7. The process according to claim 6, characterized in that the temperature of the powder when dispensed by metered addition into the flue gas stream is lower than that of the flue gas.

8. The process according to any one of claims 6 or 7, characterized in that the particle size of the powder is $d_{50} < 10$ µm

9. A device for carrying out the process according to any one of claims 1 to 8, characterized in that the irradiation chamber (4) is shaped as a Venturi tube or as a flat Venturi nozzle and the reaction volumn (5) has a larger cross section than the feed pipe for the conditioned flue gas.

10. The device according to claim 9, characterized in that the feed pipe to the irradiation chamber (4) and the discharge pipe from the irradiation chamber (4) each have been bent by 90°.

Fig. 1